Europäisches Patentamt

European Patent Office

Office européen des brevets

(19)

(11) **EP 1 705 415 A2**

(12) **EUROPEAN PATENT APPLICATION**

(43) Date of publication:
 27.09.2006 Bulletin 2006/39

(51) Int Cl.:
 *F16L 15/06* *(2006.01)*

(21) Application number: 06251128.2

(22) Date of filing: 02.03.2006

(84) Designated Contracting States:
 AT BE BG CH CY CZ DE DK EE ES FI FR GB GR
 HU IE IS IT LI LT LU LV MC NL PL PT RO SE SI
 SK TR
 Designated Extension States:
 AL BA HR MK YU

(30) Priority: 22.03.2005 US 664044 P

(71) Applicant: INTELLISERV INC
 Provo, UT 84606 (US)

(72) Inventor: **Muradov, Andrei**
 **Houston**
 **Texas 77041 (US)**

(74) Representative: **Bailey, Richard Alan**
 **Marks & Clerk,**
 **27 Imperial Square**
 **Cheltenham, GL50 1RQ (GB)**

(54) **Fatigue resistant rotary shouldered connection and method**

(57) Threaded connections are provided with a thread form that permits the construction of enlarged root radii between adjacent threads. Relatively coarse thread leads formed along conical surfaces with relatively extended tapers cooperate with relatively tall thread heights and an enlarged root radius (or radii) to produce a fatigue resistant, rotary-shouldered connection that can be assembled with reasonably attainable high torque forces. The ratios between the thread lead, measured in threads per inch, as the numerator, and denominators comprising the untruncated thread height of the thread, and/or the root truncation and/or the root radius (or radii) are maintained at low values compared to those existing in conventional prior art connections. The ratio of the untruncated thread height to the root radius (or radii) is also retained at a relatively low value as compared to that existing in many prior art configurations. The connection design produces an unexpectedly high resistance to fatigue damage or failure. The connection may be employed in any rotary-shouldered connection and is particularly effective in preventing fatigue damage in the stiffer components of drill stem assemblies including single shoulder and double shoulder drill collar connections.

Fig. 2

## Description

The present invention relates primarily to threaded connections employed to join together the ends of relatively stiff, heavy tubular pipe members employed to drill through earthen formations. More particularly, the present invention relates to a thread for use in the pin and box connection of drill collars, subassemblies, heavyweight drill pipe, or other relatively stiff tubular components of a drill stem assembly.

Heavy, relatively stiff tubular bodies are employed at the bottom of the drill string primarily to apply weight to the drill bit, to maintain the drill string in tension and to monitor at and assist in controlling the drilling process. These heavier components at the bottom of the drill string are frequently referred to as a bottom hole assembly. The bodies in the bottom hole assembly usually include tubular drill collars, drilling, steering and monitoring subassemblies and transition links such as heavyweight drill pipe.

Cyclical bending during the rotational movement of the bottom hole assembly during drilling can induced fatigue failure in the tool joint and drill collar connections of the drill string assembly. The susceptibility to fatigue failures in the drill collars and heavyweight drill pipe components differs from that of the drill string pipe in that bending stresses tend to concentrate in the connections of the drill collars and heavyweight drill pipe more so than in the tool joint connections of the more flexible drill pipe. Fatigue induced failure in the drill pipe normally occurs in the threaded male, or "pin" end of the connection, typically about two threads away from the external shoulder at the base of the pin thread. Fatigue induced failure of the threaded female or "box" end of a drill pipe tool joint is not typical. Fatigue induced failure in drill collars or heavyweight drill pipe connections typically occurs in the box, several threads from the box face or external shoulder. Pin failure in these heavy walled connections is not typical.

An explanation of the cause of fatigue failure in drill collar connections is set forth in United States Statutory Invention Registration No. H1329, published Jul. 5, 1994. The Registration describes a number of changes that may be made in the construction of a conventional drill collar connection to reduce box connection failure. One such change is to provide an enlarged thread root in the box thread in the area where most failures occur. The suggested root radius for manufacturing the thread is a single radius described as being between 0.0500 inch and 0.0625 inches. The root radius of a standard API (American Petroleum Institute) thread form is 0.038 inches. A disadvantage of a large, singe radius root such as suggested in the Registration is that a significant part of the load bearing thread flank is lost.

An improved thread form for the pin connection of a drill pipe tool joint is described in U.S. Pat. No.4,549,754 (the "'754 patent"). The '754 patent, which is incorporated herein by reference for all purposes, is assigned to the assignee of the present application. The patented thread form makes several changes in a conventional API thread to achieve the reduction in damaging stress to the pin end of the pin and box connection in a drill pipe tool joint. First, the modified thread on the pin is made capable of mating with a standard API box thread so that the modified pin thread is compatible with the box threads on equipment already present in the field. Next, the radius of the pin threads is modified to relieve the stress at the root of the threads. Third, the thread taper is modified to create an artificial pitch difference between the pin and box member and to provide for a more even distribution of loading of the thread when fully made up in a box. Forth, the new geometry of the modified connection creates a radial interference starting from the threads remote from the pin shoulder to prevent over-torquing the connection.

The thread form of the '754 patent is effective in reducing failure of the pin in the area of the base of the tool joint pin threads. The thread form is required only on the pin since box failures are rare in tool joint connections. The desired reduction in tool joint failure is thus fully attained by modifying only the pin of the connection. No significant benefit is achieved by providing the box of a tool joint with the modified thread form used on the pin and use of such thread form on the tool joint box would unnecessarily increase the cost of construction of the connection. Moreover, a connection in which the thread form was used in both the pin and the box would produce a connection in which the contact area of the stab flanks of the threads is reduced to the point of increasing the likelihood of thread gauling.

U.S. Patent No.6,467,818 (the "'818 patent"), assigned to the assignee of the present invention and incorporated herein for all purposes, describes an improved box connection for drill collars that incorporates a fatigue reducing design. As described in the '818 patent, improved performance has been realized in the connections of drill collars and heavyweight drill pipe equipped with a modified box thread form that mirrors the thread form employed in the tool joint pin design of the '754 patent. Unlike the invention of the '754, however the thread form is employed in the box of the connection rather than the pin. The root of the box thread is provided with an enlarged radius and a planar stab flank surface that extends from the root toward the pitch diameter of the thread. Unlike the '754 connection, the thread taper of the drill collar connection is left unchanged in both the pin and box. The box may be mated with a conventional pin thread and may be gauged with conventional devices used to gauge box taper, pitch diameter, and thread height. A drill collar connection made with a conventional API pin and mated with the box of the '818 patent exhibits unexpected and significantly improved resistance to fatigue-induced box damage as compared with a conventional API pin and box drill collar connection. The improved connections described and claimed in the '754 and '818 patents have a thread lead of four threads per inch, a conventional thread height and thread truncation and are fully compatible with the conventional API rotary shouldered connections.

The connection of the present invention is formed, in part, by thread tooth configurations having thread roots formed with one or more large radii surfaces and with the (untruncated) thread root having large truncations on relatively coarsely threaded, relatively long taper connections having tall thread heights (before truncation). The ratios, respectively, between the number of threads per axial inch, the untruncated thread height in inches, the root truncation in inches, and the root radius (or radii) in inches are maintained at low values relative to those existing in conventional connections. The ratio of the untruncated thread height to the thread root radius (or radii) is also retained at a relatively low value as compared with prior art designs.

The thread design of the present invention reduces fatigue damage and failure in rotary shouldered drill collar connections to an unexpectedly high degree. Drill collar connections of the present invention have been subjected to over 15 million fatigue testing cycles without ever reaching a failure in the connection. Equivalent API prior art connections subjected to the same testing procedure failed after less than 2 million testing cycles.

The design of the present invention permits the creation of a larger root radius, or root radii, in the formation of the thread of both the pin and the box of the connection. The larger root radii are accommodated, in part, by increasing the axial distance traveled by the thread in a single revolution, i.e., providing a coarser thread pitch and by increasing the height of the thread form. In one form of the invention, lengthening the taper of the connection increases the box critical section of the connection to improve its resistance to fatigue damage. The elongated taper is particularly advantageous in connections with larger outside diameters.

The combination of a coarse thread having large root radii with a large untruncated thread height and a large thread root truncation produces a strong, fatigue resistant assembly for rotary-shouldered connections.

The thread lead (or pitch), measured in threads per inch, in many of the commonly used prior art rotary-shouldered connections is 4 or more threads per inch. The untruncated thread height of these commonly used prior art connections is generally less than 0.216 in., while the truncation of the thread root of such threads is generally 0.038 in. or less. In one form of the present invention, the thread lead is 3 threads per inch, the untruncated thread height is 0.288 in. and the thread root truncation is 0.050 in.. In another form of the present invention, the thread lead is 3 threads per inch, the untruncated thread height is 0.287 in. and the thread root truncation is 0.050 in.. In these two forms of the present invention, one or more root radii having dimensions of 0.060 in. or more may be formed in the connections. By contrast, one or more of the root radii employed in constructing many prior art connections is 0.038 inches or less.

The thread design of the present invention can be machined on tubular bodies using conventional equipment and techniques. The improved resistance to fatigue damage or failure is achieved in the present invention without sacrificing performance characteristics. Make-up torque values for the connection of the present invention exceed those of the corresponding API connections while remaining well within the torque capacity of conventional rig equipment. The resistance to fatigue damage and failures of connections of the present invention made up in a drill stem assembly far exceed those of conventional API connections.

While the design of the connections of the present invention precludes them from being engaged with conventional rotary-shouldered connections, the dramatic increase in resistance to fatigue failure warrants their use in the design of bottom hole assemblies of modem drill stems. This is particularly true when the drill stem is to be employed in challenging and expensive deepwater drilling environments. The connections of the present invention may be used to assemble various drill stem components into bottom hole assemblies that may then be attached to conventional connections with the use of one or more appropriate crossover connections. When the connections of the present invention are being used in a bottom hole assembly consisting of drill collars or other stiff members, a crossover is preferably provided as the intermediate connection between flexible members of the drill stem and the more rigid bottom hole assembly.

From the foregoing it will be appreciated that a primary object of the present invention is to provide a means and method for connecting together the ends of relatively stiff tubular components with a connection having a thread form that is highly resistant to fatigue failures caused by cyclical stressing of the connection.

Another object of the present invention is to provide a threaded connection in which the thread pitch or lead is increased beyond that of certain conventional connections such that the number of threads per unit length of axial travel is less than that of such conventional prior art connections to permit the formation of one or more larger root radii in the space between adjacent threads of the connection.

Yet another related object of the present invention is to provide a large untruncated thread tooth form and a large thread root truncation as compared to various common prior art connections to further assist in the formation of larger root radii between the adjacent thread teeth of the connection

A related object of the present invention is to maintain a ratio of the thread lead to the untruncated thread height as small as possible consistent with the size of the outside and inside diameters of the threaded tubular bearing the connection to maximize the space available for formation of a relatively large thread root between adjacent thread teeth in the connection.

It is also an object of the present invention to maintain a ratio of the thread lead, in threads per axial length, to the value of the thread root truncation that is as small as possible consistent with the size of the outside and inside diameters of the threaded tubular bearing the connection to maximize the space available for formation of a relatively large thread root between adjacent thread teeth in the connection

An object of the present invention is to maintain a ratio of the thread lead to the length of the root radius (or root radii) as small as possible consistent with the size of the outside and inside diameters of the threaded tubular bearing the connection to maximize the space available for formation of a relatively large thread root between adjacent thread teeth in the connection.

A further object of the present invention is to maintain a ratio of the untruncated thread height to the root radius (or root radii) length as small as possible consistent with the size of the outside and inside diameters of the threaded tubular bearing the connection to maximize the space available for formation of a relatively large thread root between adjacent thread teeth in the connection.

It is also an object of the present invention to provide a double shouldered rotary connection for securing together the ends of drill collars wherein the combination of tall, highly truncated course threads with large root radii form a connection that can be assembled with relatively high makeup torques while maintaining significant resistance to fatigue damage and failure during operations involving cyclical flexing and stressing of the connection.

An object of the present invention is to provide a method for forming a rotary shouldered connection wherein, as compared to conventional connections, relatively large, coarse threads with large thread teeth and thread root truncations are formed on the ends of heavy tubular bodies and wherein such bodies are secured together with such threads using higher torque values than employed to assemble such conventional connections to thereby produce a connection that exhibits increased operating capabilities with superior resistance to fatigue damage and failure.

The foregoing objects, features and advantages of the present invention, as well as others, will be more fully understood and better appreciated by reference to the following drawings, Specification and Claims.

Figure 1 is a vertical cross sectional view of a double-shouldered box of the present invention formed at one end of a drill collar connection;

Figure 2 is an enlarged cross sectional view detailing the thread form of the box of Figure and in 1;

Figure 3 is a vertical cross sectional view of a double shoulder pin of the present invention formed at one end of a drill collar connection;

Figure 4 is an enlarged cross sectional view detailing the thread form of the pin of Figure 3;

Figure 5 is an enlarged cross sectional view illustrating details in the construction of a stress relief groove formed at the base of the pin threads in the pin of Figure 3;

Figure 6 is a vertical cross sectional view of a single shouldered box of the present invention form at one end of a drill collar connection;

Figure 7 is an enlarged cross sectional view detailing the thread form of the box of Figure 6;

Figure 8 is a vertical cross sectional view of a single shouldered pin of the present invention formed at one end of a drill collar connection;

Figure 9 is an enlarged cross sectional view detailing the thread form of the pin of Figure 9; and

Figure 10 is an enlarged cross sectional view illustrating details in the construction of a stress relief groove at the base of the pin threads in the pin of Figure 9.

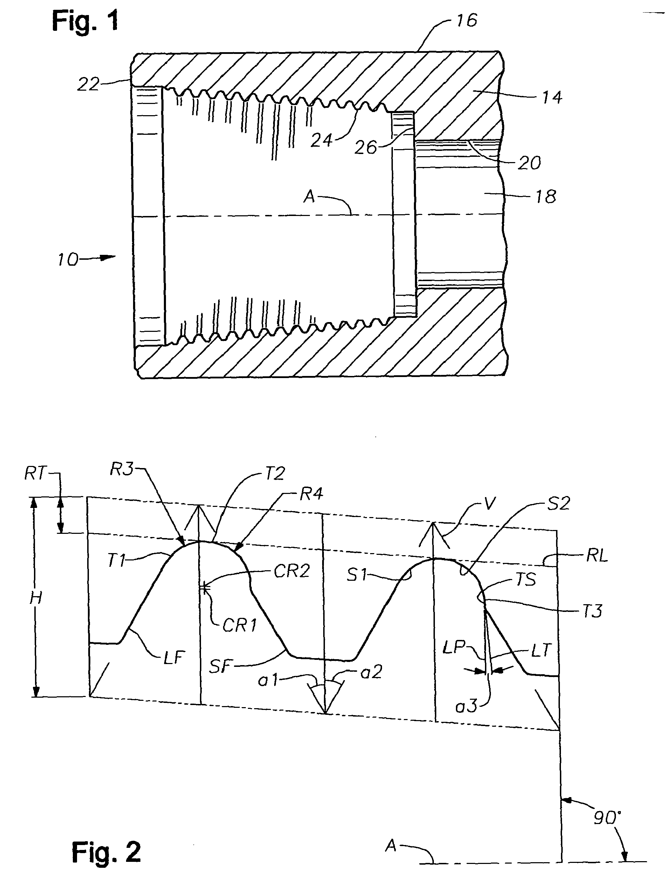

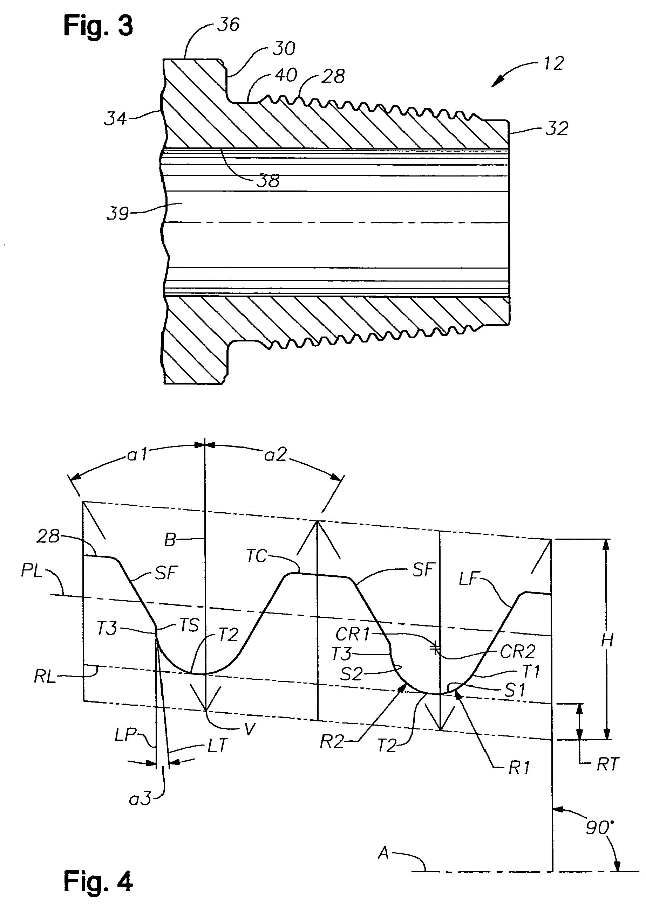

An internally threaded box connection of the present invention is indicated generally at 10 in Figure 1. The box connection 10 may be the threaded end of a well pipe tubular that serves as a drill collar or other tubular component forming a part of the bottom hole assembly of a drill stem. The box connection 10 is designed to receive and connect with an externally threaded pin illustrated in Figure 3 and indicated generally at 12. The pin 12 and box 10 are provided with threads that draw the two components together axially when they are rotated together with a conventional torquing device (not illustrated).

The box 10 is formed at one axial end of a tubular body 14 having an external cylindrical surface 16 coaxially disposed about a central opening 18 defined within an internal cylindrical surface 20. The central opening 18 extends through the body 14 and terminates in a pin end connection (not illustrated) such as the connection illustrated in Figure 3. When employed as a drill collar, the body 14 will typically vary in length from 20 to 40 ft.. Heavy walled subassemblies using the connectors of Figures 1 and 3 may be 10 ft. or less in length.

The box 10 of the present invention is provided with an external annular shoulder 22 formed annularly at one end of the body 14. Helically developed threads 24 extend from the area adjacent the external shoulder 22 toward an internal annular shoulder 26. The two annular shoulders 22 and 26 are disposed coaxially with the cylindrical surfaces 16 and 20 about a central axis A.

Referring jointly now to Figures 1 and 3, the box threads 24 are complementary to external pin threads 28 formed on the pin 12. The pin threads 28 extend helically between an external annular shoulder 30 and a pin nose annular shoulder 32. The pin 12 is formed at one axial end of a tubular body 34 having an external cylindrical surface 36 coaxially disposed about a central internal cylindrical surface 38. A central cylindrical opening 39 extends throughout the tubular body 34. An external annular stress relief groove 40 is formed intermediate the ends of the pin threads 28 and the external pin shoulder 30.

The outside diameter of the tubular body 34 with the pin 12 is the same as that of the body 14 with the box 10. Similarly, the diameter of the central opening 39 extending through the body 34 is the same as that of the opening 18 extending throughout the body 14. When two tubular components are threaded together by a pin and box such as the pin 12 and box 10, the assembled components form a tubular body having a continuous external cylindrical outer surface and a continuous internal central opening such that the wall thickness at the connection of the pin and box is the same as that of the bodies 14 and 34.

Figures 2 and 4 illustrate details in the construction of the box and pin threads, respectively, of a connection of the present invention. Referring to Figure 4, the untruncated thread height of the pin thread 28 is indicated at H The dimension RT indicates the root truncation wherein the root is formed with a first cutting radius R1 and a smaller radius R2. The thread roots are indicated, before truncation, extending to a vertex V formed by the intersection of the extended surfaces of the load flank LF and stab flank SF of the thread form 28. The threads 28 are developed along a pitch line PL. The included angle defined by the stab flank SF and load flank LF is illustrated bisected by a line B perpendicular to a central thread axis A. Bisection of the included angle between the flanks produces equal angles a1 and a2. The radius R1 is centered at CR1 to produce a curved surface S1 and the smaller radius R2 is centered at CR2 to produce a curved surface S2. The center CR1 of the radius R1 is defined by selecting the radius size and establishing a first tangent point at T1 with the load flank LF and a second tangent point T2 at the desired root diameter RL. The root diameter RL is the thread height H minus the root truncation RT. The crest of the thread after truncation is indicated at TC. The center of the radius R2 is defined by selecting the radius size and beginning the radius cut at the tangent point T2 and extending it to a tangent point T3. The point T3 is established by determining the tangent point of the radius cut with a line LT that is offset by an angle a3 from a line LP perpendicular to the axis A. The line LP intersects the stab flank SF at a point that is a distance R1 from the root diameter RL. The thread root surface TS between the point T3 and the intersection with the stab flank surface SF is flat, coinciding with the surface formed by the line LT.

The box threads illustrated in Figure 2 will be understood to be constructed following a procedure analogous to that described with regard to the construction of the pin threads illustrated in Figure 4. The radii R1 and R2 of Figure 4 are the same size as the radii R1 and R2, respectively, of Figure 2.

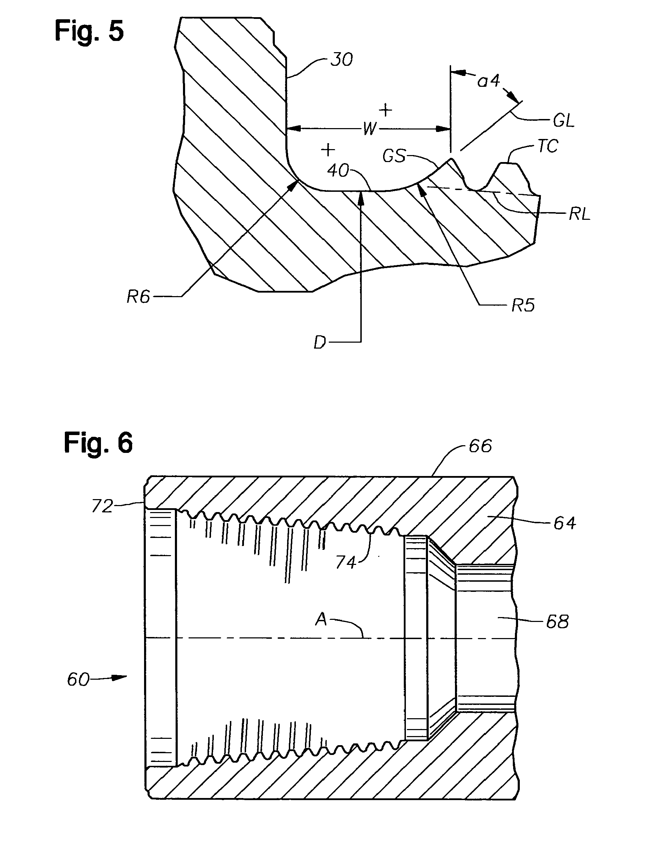

Figure 5 illustrates details in the construction of the stress relief groove 40 constructed at the base of the pin threads 28. The base of the groove 40 is a cylindrical surface, coaxial with the axis A, having a diameter D. The upper opening of the groove 40 is a distance W from the shoulder 30. A line GL that intersects the thread crest TC at an angle a4 and at a distance W from the shoulder 30 is used to define the transition surface between the thread crest and the cylindrical surface of the groove 40. A value for the radius R5 is selected to provide a radius cut transitioning between the surface established by line GL and that established by the cylindrical groove base 40. A surface GS extending between the thread crest TC and the tangent point with the radius R5 conforms to the flat surface defined by the line GL. The intersection of the cylindrical surface 40 and the annular shoulder 30 is defined by a radius R6 that forms a curving transition between the two surfaces.

In a form of the invention designated DC50, the pins and boxes of drill collar connections were constructed with the following dimensions (the reference characters are those employed in Figures 1-5):

DC50 connections

Outside diameter of the cylindrical surfaces of the bodies 16 and 36: 6.0 in.
Inside diameter of the cylindrical surfaces 20 and 38: 3.0 in.
Length between the pin shoulder 30 and the pin nose 32: 5.75 in.
Length between the box face 22 and the internal shoulder 26: 5.755 in.
Pitch diameter of the pin and box threads: 5.0 in.
Thread lead for pin and box: 3 threads per inch
Thread taper for pin and box: 2.00 in. per foot
Untruncated thread height: 0.288 in.

Thread root truncation: 0.050 in.
Thread tooth truncation: 0.0864
R1 and R3: 0.065 in.
R2 and R4: 0.060 in.
R5: 0.050 in.
R6: 0.260 in.
Cylindrical diameter D.: 44.691 in.
Angle a1 and a2: 30 degrees
Angle a3: 5 degrees
Angle a4: 45 degrees

In a second form of the invention, designated as DC58 connections, the pins and boxes of drill collar connections were constructed with the following dimensions (the reference characters are those used in Figures 1-5):

    DC58 connections

Outside diameter of the cylindrical surfaces of the bodies 16 and 36: 7.5 in.
Inside diameter of the cylindrical surfaces 20 and 38: 3.0 in.
Length between the pin shoulder 30 and the pin nose 32: 6.750 in.
Length between the box face 22 and the internal shoulder 26: 6.755 in.
Pitch diameter of the pin and box threads: 5.800
Thread lead for pin and box: 3 threads per inch
Thread taper for pin and box: 3.00 in. per foot
Untruncated thread height: 0.287 in.
Thread root truncation: 0.050 in.
Thread tooth truncation: 0.0861
R1 and R3: 0.065 in.
R2 and R4: 0.060 in.
R5: 0.050 in.
R6: the 0.313 in.
Cylindrical diameter D: 5.482 in.
Angle al and a2: 30 degrees
Angle a3: 5 degrees
Angle a4: 45 degrees

In testing of a DC58 connection in an 8" X 3" configuration compared to a conventional API 6-5/8 Regular connection, the following results were attained:

    (Baseline for comparison) 6-5/8 Regular with phosphate, cold rolled thread roots, SRG (stress relief groove) and BBB (bore back box)

3 valid tests at 500 ue (micro strain) or 750,000 in-lbs bending moment

    · Test 1: 1,845,040 cycles to failure (failed in pin last engaged thread root)
    · Test 2: 1,275,531 cycles to failure (failed in box last engaged thread root)
    · Test 3: 1,040,026 cycles to failure (failed in box last engaged thread root)
    · Test 4: 1,355,070 cycles to failure (failed in pin last engaged thread root)
    · Test Avg: 1,378,917 cycles to failure

DC58 w/phosphate, cold rolled thread roots, SRG, NO BBB
3 valid tests at 500 ue (micro strain) or 750,000 in-lbs bending moment (equivalent loading)

    · Test 1: 11,034,468 cycles (NOTE: DID NOT FAIL...STOPPED TEST DUE TO GREATER THAN 10 M cycles)
    · Test 2: 15,441,140 cycles (NOTE: DID NOT FAIL...STOPPED TEST DUE TO GREATER THAN 15 M cycles)
    · Test 3: 10,186,224 cycles (NOTE: DID NOT FAIL...STOPPED TEST DUE TO GREATER THAN 10 M cycles)
    · Test Avg: 12,220,611 cycles without failure.
    · Performance to date: On average, 8.86 times better than API equivalent connection, with still no DC58 thread failure noted.

Three similar tests were conducted on the DC50 connection. The tests included 2 tests that were considered valid, and a third test that was considered not valid (considered anomalous in that it encountered a premature failure at 1.2 million cycles). In the valid tests, the connections were cycled through over 10 million cycles without failure in the first test and through over 15 million cycles in the second test.

Table 1 illustrates the relationship between various common prior art connections and of the thread taper TPI in turns per inch, thread height H in inches, the root truncation RT in inches, and cutting radii R1 and R2 used to form the thread roots. As may be noted by reference to Table 1, the two connections of the present invention, DC50 and DC58, have significantly lower ratios of selected dimensions. Thus, the ratio of the threads per inch to the thread height of the DC50 is 10.4, which is substantially smaller than the next larger ratio of 18.5 for the corresponding dimensions of most of the listed prior art connections. Similarly, the ratio of the turns per inch per the root truncation for the DC50 is 60. The next larger corresponding ratio for the other prior art components is 105.3. The ratios of the turns per inch per the root radii of the DC50 are 50 for the radius R1 and 46 for the radius R2. The next largest corresponding ratio for the single radius of the prior art do it is 105.3. The ratios of the untruncated thread height to the root radii R1 and R2 of the DC50 are 4.8 and 4.4. The next larger corresponding ratio for the single radius prior art connections is 5.684. In each instance, it will be appreciated that the relative sizes of the components in the connections of the present invention provide ratios that are substantially below those encountered with the indicated prior art connections. The result of establishing these low ratios in the design of the present invention contributes to the increased fatigue resistance exhibited by the connection as compared with those of the prior art.

## TABLE 1

| Connection | TPI | H | RT | R1 (R2) | TPI / H | TPI/RT | TPI/R1(R2) | H/R1 | (R2) |
|---|---|---|---|---|---|---|---|---|---|
| NC35 | 4 | 0.216 | 0.038 | 0.038 | 18.5 | 105.3 | 105.3 | 5.684 | |
| NC38 | 4 | 0.216 | 0.038 | 0.038 | 18.5 | 105.3 | 105.3 | 5.684 | |
| NC40 | 4 | 0.216 | 0.038 | 0.038 | 18.5 | 105.3 | 105.3 | 5.684 | |
| NC44 | 4 | 0.216 | 0.038 | 0.038 | 18.5 | 105.3 | 105.3 | 5.684 | |
| NC46 | 4 | 0.216 | 0.038 | 0.038 | 18.5 | 105.3 | 105.3 | 5.684 | |
| NC50 | 4 | 0.216 | 0.038 | 0.038 | 18.5 | 105.3 | 105.3 | 5.684 | |
| NC56 | 4 | 0.215 | 0.038 | 0.038 | 18.6 | 105.3 | 105.3 | 5.684 | |
| NC61 | 4 | 0.215 | 0.038 | 0.038 | 18.6 | 105.3 | 105.3 | 5.684 | |
| NC70 | 4 | 0.215 | 0.038 | 0.038 | 18.6 | 105.3 | 105.3 | 5.684 | |
| NC77 | 4 | 0.215 | 0.038 | 0.038 | 18.6 | 105.3 | 105.3 | 5.684 | |
| 4-1/2 REG | 5 | 0.172 | 0.020 | 0.020 | 29.0 | 250.0 | 250.0 | 8.6 | |
| 5-1/2 REG | 4 | 0.215 | 0.025 | 0.025 | 18.6 | 160.0 | 160.0 | 8.6 | |
| 6-5/8 REG | 4 | 0.216 | 0.025 | 0.025 | 18.5 | 160.0 | 160.0 | 8.64 | |
| 7-5/8 REG | 4 | 0.215 | 0.025 | 0.025 | 18.6 | 160.0 | 160.0 | 8.64 | |
| 8-5/8 REG | 4 | 0.215 | 0.025 | 0.025 | 18.6 | 160.0 | 160.0 | 8.64 | |
| 4-1/2 FH | 5 | 0.172 | 0.020 | 0.020 | 29.0 | 250.0 | 250.0 | 8.6 | |
| 5-1/2 FH | 4 | 0.216 | 0.025 | 0.025 | 18.5 | 160.0 | 160.0 | 8.64 | |
| 6-5/8 FH | 4 | 0.216 | 0.025 | 0.025 | 18.5 | 160.0 | 160.0 | 8.64 | |
| DC50 | 3 | 0.288 | 0.050 | .060(.065) | 10.4 | 60.0 | 50.0 (46.0) | 4.8 | (4.4) |
| DC58 | 3 | 0.287 | 0.050 | .060(.065) | 10.5 | 60.0 | 50.0 (46.0) | 4.8 | (4.4) |

Figure 6 of the drawings illustrates a modified form of the present invention, indicated generally at 60, comprising a single shouldered rotary-shouldered connection. The connection 60 is a box configuration formed at one end of a tubular body 64 having an external cylindrical surface 66 and a coaxial central opening 68. Internal threads 74 extend helically through the box of the connection 60 in a conventional manner.

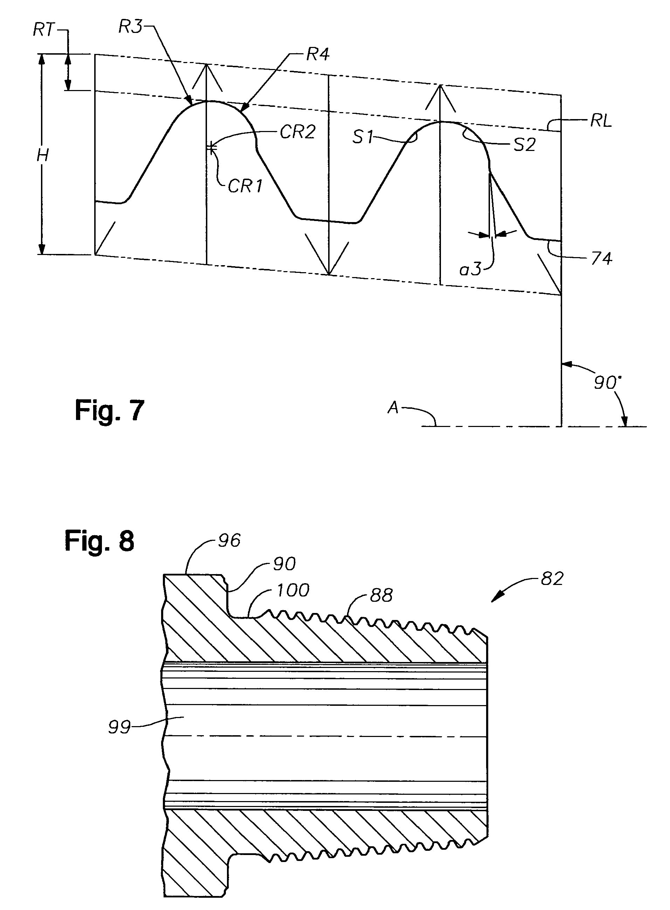

Figure 8 illustrates a modified pin form of the connection of the presence invention, indicated generally at 82. The connection 82 includes external, helically extending threads 88 and an external annular shoulder 90. The connection 82 is formed on a tubular body having an external surface 96 and a central opening 99. A stress relief groove 100 extends annually between the shoulder 90 and the threads 88.

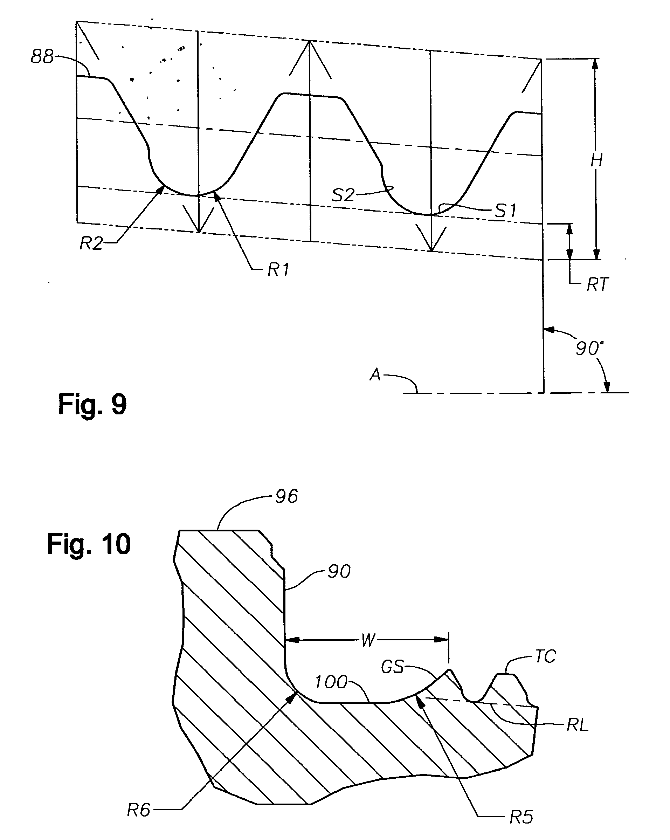

Figures 7, 9 and 10 illustrate details in the construction of the box 60 and pin 82 of the modified form of the invention. Throughout the drawings, similar reference characters have the same meaning as described in detail with reference to the embodiment of Figures 1-5. The techniques of construction and other details regarding the making and use of the embodiment of Figures 6-10 are similar or analogous in obvious manner to those described with reference to Figures 1-5.

The foregoing illustrations and descriptions of the connections of the present invention are exemplary of the preferred manner of making and using the invention. It will be appreciated that the design and construction and method of connection described herein may be modified without departing from the spirit and scope of the invention, which is more completely defined in the claims that follow.

**Claims**

1. A pin for securing together threaded tubular bodies, comprising:

   a tapered pin formed at one axial end of a first tubular body, said pin having an external pin taper PT,
   a pin thread formed externally along said pin, said pin thread having a pin lead PTPI, an untruncated pin thread height PH, a pin root radius PR1 and a pin root truncation PRT, and
   the ratio of said pin lead PTPI to said untruncated pin thread height PH is: PTPI / PH <15.

2. A box for securing together threaded tubular bodies, comprising:

   a tapered box formed at one axial end of a second tubular body, said box having an internal box taper BT,
   a box thread formed internally along said box, said box thread having a box lead BTPI, an untruncated box thread height BH, a box root radius BR1 and a box root truncation BRT, and
   the ratio of said box lead BTPI to said untruncated box thread height BH. is BTPI / BH <15.

3. A connection for securing together threaded tubular bodies, comprising:

   a tapered pin formed at one axial end of a first tubular body, said pin having an external pin taper PT,
   a pin thread formed externally along said pin, said pin thread having a pin lead PTPI, an untruncated pin thread height PH, a pin root radius PR1 and a pin root truncation PRT,
   a tapered box formed at one axial end of a second tubular body, said box having an internal box taper BT,
   a box thread formed internally along said box, said box thread having a box lead BBL, an untruncated box thread height BH, a box root radius BR1 and a box root truncation BRT, and
   the ratio of said pin lead PTPI to said untruncated pin thread height PH is PTPI / PH <15.

4. A connection for securing together threaded tubular bodies, comprising:

   a tapered pin formed at one axial end of a first tubular body, said pin having an external pin taper PT,
   a pin thread formed externally along said pin, said pin thread having a pin lead PTPI, an untruncated pin thread height PH, a pin root radius PR1 and a pin root truncation PRT,
   a tapered box formed at one axial end of a second tubular body, said box having an internal box taper BT,
   a box thread formed internally along said box, said box thread having a box lead BTPI, an untruncated box thread height BH, a box root radius BR3 and a box root truncation BRT, and
   the ratio of said box lead BTPI to said untruncated box thread height BH is BTPI / BH <15.

5. A connection for securing together threaded tubular bodies, comprising:

   a tapered pin formed at one axial end of a first tubular body, said pin having an external pin taper PT,
   a pin thread formed externally along said pin, said pin thread having a pin lead PTPI an untruncated pin thread height PH, a pin root radius PR1 and a pin root truncation PRT
   a tapered box formed at one axial end of a second tubular body, said box having an internal box taper BT,
   a box thread formed internally along said box, said box thread having a box lead BTPI, an untruncated box thread height BH, a box root radius BR3 and a box root truncation BRT and
   The ratio of said pin lead PTPI to said untruncated pin thread height PH is:

$$PTPI/PH < 15,$$

and
the ratio of said box lead BTPI to said untruncated box thread height BH is:

$$BTPI/BH < 15.$$

6. A pin for securing together threaded tubular bodies, comprising:

a tapered pin formed at one axial end of a first tubular body, said pin having an external pin taper PT,
a pin thread formed externally along said pin, said pin thread having a pin lead PTPI, an untruncated pin thread height PH, a truncated pin thread height PH, a pin root radius PR1 and a pin root truncation PRT, and
The ratio of said pin lead PTPI to said pin root radius PR1 is:

$$PTPI/PR1 < 100.$$

7. A box for securing together threaded tubular bodies, comprising:

a tapered box formed at one axial end of a second tubular body, said box having an internal box taper BT,
a box thread formed internally along said box, said box thread having a box lead BTPI, an untruncated box thread height BH, a box root radius BR3 and a box root truncation BRT, and
the ratio of said box lead BTPI to said box root radius BR3 is:

$$BTPI/BR1 < 100.$$

8. A connection for securing together threaded tubular bodies, comprising:

a tapered pin formed at one axial end of a first tubular body, said pin having an external pin taper PT,
workdays this pin thread formed externally along said pin, said pin thread having a pin lead PTPI, an untruncated pin thread height PH, a pin root radius PR1 and a pin root truncation PRT,
a tapered box formed at one axial end of a second tubular body, said box having an internal box taper BT,
a box thread formed internally along said box, said box thread having a box lead BTPI, an untruncated box thread height BH, a box root radius BR3 and a box root truncation BRT,
the ratio of said pin lead PTPI to said pin root radius PR1 is:

$$PTPI/PR1 < 100,$$

the ratio of said box lead BTPI to said box root radius BR3 is:

$$BTPI/BR2 < 100.$$

9. A pin as defined in claim 1 wherein the range of said pin thread lead PTPI is:

$$2 \text{ threads/inch} < PTPI < 4 \text{ threads/inch}.$$

**10.** A pin as defined in claim 1 wherein the range of the taper PT is:

$$1 \text{ inch/foot} < PT < 4 \text{ inches/foot.}$$

**11.** A pin for securing together threaded tubular bodies, comprising:

a tapered pin formed at one axial end of a first tubular body, said pin having an external pin taper PT,
a pin thread formed externally along said pin, said pin thread having a pin lead PTPI, an untruncated pin thread height PH, a pin root radius PR1 and a pin root truncation PRT, and
the ratio of said pin thread height PH to said pin root radius PR1 is

$$PH / R1 < 5.5.$$

**12.** A box for securing together threaded tubular bodies, comprising:

a tapered box formed at one axial end of a second tubular body, said box having an internal box taper BT,
a box thread formed internally along said box, said box thread having a box lead BTPI, an untruncated box thread height BH, a box root radius BR1 and a box root truncation BRT, and
the ratio of said untruncated thread height BH to said box root radius be BR1 is:

$$BH/BR1 < 5.5.$$

## Fig. 1

## Fig. 2

**Fig. 3**

**Fig. 4**

**Fig. 5**

**Fig. 6**

**Fig. 7**

**Fig. 8**

88

S2

S1

R2

R1

H

RT

A

90°

## Fig. 9

96

90

W

GS

TC

100

RL

R5

R6

## Fig. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US H1329 A
- US 4549754 A
- US 6467818 B